# EUROPÄISCHE PATENTANMELDUNG

(11) **EP 3 226 023 A1**
(43) Veröffentlichungstag der Anmeldung: **04.10.2017**
(21) Anmeldenummer: 17160109.9
(22) Anmeldetag: 09.03.2017
(51) Int. Cl.: G01S 7/02, G01F 23/284, G01S 13/87

(54) **VORRICHTUNG ZUR MESSUNG DER ENTFERNUNG ZU EINEM OBJEKT**

(30) Priorität: 28.03.2016 DE 102016105646
(71) Anmelder: Krohne Messtechnik GmbH, 47058 Duisburg (DE)
(72) Erfinder: Gerding, Michael, 44805 Bochum (DE); Wegemann, Uwe, 47443 Moers (DE); Schmits, Christoph, 44149 Dortmund (DE)
(74) Vertreter: Gesthuysen Patent- und Rechtsanwälte

(57) **Zusammenfassung**

Eine Vorrichtung (1) zur Messung der Entfernung zu einem Objekt (20), umfassend wenigstens zwei freistrahlende Sendeeinheiten (2, 3, 15) zur Aussendung eines elektromagnetischen Messsignals (4, 5, 18), wenigstens eine Empfangseinheit (6, 7, 16) für den Empfang eines an dem Objekt (20) reflektierten Reflexionssignals (8, 9, 19) und wenigstens eine Auswerteeinheit (10, 11, 17). Die wenigstens eine Empfangseinheit (6, 7, 16) leitet das empfangene Reflexionssignal (8, 9, 19) an die wenigstens eine Auswerteeinheit (10, 11, 17) weiter. Die Sendeeinheiten (2, 3, 15) und die wenigstens eine Empfangseinheit (6, 7, 16) sind innerhalb einer Messumgebung angeordnet. Die Sendeeinheiten (2, 3, 15) und die wenigstens eine Empfangseinheit (6, 7, 16) weisen wenigstens einen gemeinsamen Messfrequenzbereich (21) auf. Die von den Sendeeinheiten (2, 3, 15) ausgesendeten Messsignale (4, 5, 18) bzw. die aus den Messignalen resultierenden Reflexionssignale (8, 9, 19) sind voneinander unterscheidbar.

## Beschreibung

Die vorliegende Erfindung betrifft eine Vorrichtung zur Messung der Entfernung zu einem Objekt, umfassend wenigstens zwei freistrahlende Sendeeinheiten zur Aussendung eines elektromagnetischen Messsignals, wenigstens eine Empfangseinheit für den Empfang eines an dem Objekt reflektierten Reflexionssignals und wenigstens eine Auswerteeinheit, wobei die wenigstens eine Empfangseinheit das empfangene Reflexionssignal an die wenigstens eine Auswerteeinheit weiterleitet, die Sendeeinheiten und die wenigstens eine Empfangseinheit innerhalb einer Messumgebung angeordnet sind und dass die Sendeeinheiten und die wenigstens eine Empfangseinheit wenigstens einen gemeinsamen Messfrequenzbereich aufweisen.

Die Erfindung bezieht sich insbesondere auf die Messung der Entfernung einer Sende- bzw. Empfangseinheit zu einer Füllgutoberfläche in einem Behälter.

Grundsätzlich ist es bekannt, Entfernungen zu einem Objekt, beispielsweise der Oberfläche eines Füllgutes in einem Behälter, basierend auf der Laufzeit eines an dem Objekt reflektierten Messsignals zu bestimmen. Dazu wird ein Messsignal, beispielsweise in Form eines pulsförmigen Radarsignals, von einer Sendeeinheit in Richtung auf das Objekt ausgesendet und nach der Reflexion an dem Objekt von einer Empfangseinheit detektiert. Das empfangene Signal wird anschließend zur Auswertung an eine Auswerteeinheit weitergeleitet. Aus der Laufzeit des Messsignals kann die Entfernung der Sendeeinheit zum Objekt bestimmt werden. Im Fall der Füllstandmessung kann aus dem Abstand der Sendeeinheit zur Füllgutoberfläche der Füllstand in dem Behälter bestimmt werden. Häufig ist die Sendeeinheit gleichzeitig als Empfangseinheit ausgestaltet.

Weiterhin ist es bekannt, ein linear frequenzmoduliertes Radarsignal als Messsignal im zuvor beschriebenen Verfahren zu verwenden. Zur Auswertung des empfangenen Reflexionssignals und zur Bestimmung der Entfernung zum Objekt wird aus der aktuellen Sendefrequenz und der empfangenen Frequenz die Differenzfrequenz bestimmt. Diese ist direkt proportional zum Abstand des Objektes.

Zur Erhöhung der Betriebs- und Ausfallsicherheit ist bei gattungsgemäßen Vorrichtungen wenigstens eine weitere funktional gleichwertige oder vergleichbare Sendeeinheit vorhanden. Durch den Einsatz von wenigstens zwei Sendeeinheiten kann auch beim Ausfall einer Sendeeinheit gewährleistet werden, dass der Betrieb der Vorrichtung nicht unterbrochen wird. Sind die Sendeeinheiten gleichzeitig als Empfangseinheiten ausgestaltet, gewährleistet der Einsatz von wenigstens zwei Sende- und Empfangseinheiten, die jeweils für sich die Entfernung zu dem Objekt bestimmen, eine besonders hohe Ausfallsicherheit.

Die Sendeeinheiten und die wenigstens eine Empfangseinheit einer gattungsgemäßen Vorrichtung weisen einen Messfrequenzbereich auf, innerhalb dessen die Sendeeinheiten und die wenigstens eine Empfangseinheit betrieben werden. D. h., dass die Frequenz der von den Sendeeinheiten ausgesendeten Messsignale innerhalb des Empfindlichkeitsbereichs der Empfangseinheit liegt. Das von der Empfangseinheit empfangene Reflexionssignal bzw. ein davon abgeleitetes Messsignal wird dann an die Auswerteeinheit weitergeleitet, wenn die Frequenz des Reflexionssignals innerhalb des Messfrequenzbereichs der Empfangseinheit liegt. Frequenzen, die außerhalb des gerätespezifischen Messfrequenzbereichs liegen, werden beispielsweise durch entsprechende Hoch- und/oder Tiefpassfilter herausgefiltert.

Wenn es heißt, dass die Sendeeinheiten und die Empfangseinheit einen gemeinsamen Messfrequenzbereich aufweisen, dann ist damit gemeint dass die Sendeeinheiten und die Empfangseinheit einen gemeinsamen Frequenzbereich aufweisen, in dem jede Sende- und jede Empfangseinheit betrieben wird, in dem also die Sendeeinheiten elektromagnetische Signale emitttieren und die Empfangseinheit elektromagnetische Strahlen als relevante Messsignale empfängt. Besonders bevorzugt, sind die Messfrequenzbereiche der Sendeeinheiten und der wenigstens einen Empfangseinheit identisch. Weisen die Sendeeinheiten und die Empfangseinheiten identischen Messfrequenzbereiche auf, bleibt die Qualität der Messung erhalten, wenn eine der Sendeeinheiten ausfällt.

Darüber hinaus sind die Sendeeinheiten und die Empfangseinheit von gattungsgemäßen Vorrichtungen innerhalb einer Messumgebung angeordnet. Dies ist genau dann der Fall, wenn die Empfangseinheit das Mess- bzw. Reflexionssignal von jeder Sendeeinheit zumindest teilweise empfängt. Sind mehr als eine Empfangseinheit vorhanden, sind die Sende- und Empfangseinheiten genau dann innerhalb einer Messumgebung angeordnet, wenn jede Empfangseinheit das Mess- bzw. Reflexionssignal von wenigstens zwei Sendeeinheiten empfängt, insbesondere das Mess- bzw. Reflexionssignal von jeder Sendeeinheit empfängt. Außerdem sind mehrere Sende- bzw. Empfangseinheiten im Rahmen der vorliegenden Erfindung auch nur dann innerhalb einer Messumgebung angeordnet, wenn sich die Entfernungsmessung auf dasselbe Objekt bezieht. Denn die zusätzlich vorhandenen Sende- und Empfangseinheiten verbessern die funktionale Sicherheit der Vorrichtung dadurch, dass sie den Betrieb der Vorrichtung aufrechterhalten, wenn eine Sendeeinheit ausfällt. In diesem Fall ersetzen die zusätzlich vorhandenen Sendeeinheiten die ausgefallene Sendeeinheit. Sind die Sendeeinheiten gleichzeitig als Empfangseinheiten ausgestaltet, ersetzen zusätzlich vorhandene Sende- und Empfangseinheiten eine ausgefallene Sende- und Empfangseinheit.

Beispielsweise sind die Sendeeinheiten und die wenigstens eine Empfangseinheit in dem gleichen Behälter angeordnet, wobei der Abstand zur Oberfläche eines Füllgutes gemessen wird.

Werden mehrere Sende- und Empfangseinheiten gleichzeitig innerhalb eines Messfrequenzbereiches betrieben, kann es jedoch zur Beeinflussung der Sende- bzw. Empfangseinheiten untereinander kommen, was sich in Messfehlern der gemessenen Entfernung widerspiegelt.

Davon ausgehend liegt der vorliegenden Erfindung die Aufgabe zugrunde, eine Vorrichtung zur Messung der Entfernung zu einem Objekt anzugeben, die eine besonders hohe Betriebssicherheit sowie eine besonders hohe Zuverlässigkeit aufweist.

Diese Aufgabe wird erfindungsgemäß dadurch gelöst, dass der Betrieb der Sendeeinheiten aufeinander abgestimmt ist, so dass die von den Sendeeinheiten ausgesendeten Messsignale bzw. die aus den Messignalen resultierenden Reflexionssignale voneinander unterscheidbar sind und eine eindeutige Zuordnung jedes Messsignals bzw. Reflexionssignals zu jeweils einer Sendeeinheit durch die Empfangseinheit bzw. durch die mit der Empfangseinheit in Verbindung stehende Auswerteeinheit unabhängig von der Anordnung der Sendeeinheiten möglich ist.

Um Messfehler zu vermeiden, die daraus resultierten, dass ein von der Empfangseinheit empfangenes Mess- oder Reflexionssignal nicht eindeutig einer der Sendeeinheiten zugeordnet werden kann, sind die ausgesendeten Messsignale voneinander unterscheidbar und zwar unabhängig von der Anordnung der Sendeeinheiten. Können zwei Messsignale lediglich aufgrund ihrer räumlichen Ausbreitung eindeutig einer Sendeeinheit zugeordnet werden, sind sie nicht unterscheidbar im erfindungsgemäßen Sinne.

Im Ergebnis weist die erfindungsgemäße Vorrichtung damit den Vorteil auf, dass eine besonders hohe Betriebssicherheit durch den Einsatz von wenigstens zwei Sendeeinheiten gewährleistet werden kann, wobei sichergestellt ist, dass die Sendeeinheiten in dem Fall, in dem die wenigstens zwei Sendeeinheiten gleichzeitig betrieben werden, störungsfrei arbeiten.

Gemäß einer ersten bevorzugten Ausgestaltung umfasst die Vorrichtung ein Füllstandmessgerät zur Messung des Füllstandes in einem Behälter. Eine entsprechende Füllstandmessung erfolgt mittels der erfindungsgemäßen Vorrichtung besonders zuverlässig und unter Erfüllung besonders hoher Sicherheitsanforderungen.

Gemäß einer weiteren bevorzugten Ausgestaltung ist jede Sendeeinheit gleichzeitig eine Empfangseinheit. Diese Ausgestaltung wird im Folgenden dadurch bezeichnet, dass die Sendeeinheit und die Empfangseinheit identisch sind. Eine entsprechende Ausgestaltung der erfindungsgemäßen Vorrichtung hat den Vorteil, dass die Vorrichtung besonders einfach ausgestaltet ist.

Vorzugsweise ist das Messsignal ein pulsförmiges oder frequenzmoduliertes Radarsignal.

Die erfindungsgemäße Vorrichtung kann dadurch weiter verbessert werden, dass der Betrieb der Sendeeinheiten derart abgestimmt ist, dass zu einem Zeitpunkt jeweils nur eine einzige Sendeeinheit aktiv ist. Vorzugsweise senden die Sendeeinheiten abwechselnd Messsignale in Richtung des Objektes aus. Werden die Messsignale von einer Empfangseinheit empfangen, sind sie dadurch den einzelnen Sendeeinheiten eindeutig zuzuordnen, dass sie zeitlich versetzt empfangen werden. Sind die Sendeeinheiten gleichzeitig als Empfangseinheiten ausgestaltet, ist es besonders bevorzugt, wenn jede Empfangseinheit jeweils zeitgleich mit der identischen Sendeeinheit aktiv ist. Dadurch ist sichergestellt, dass die Empfangseinheiten kein Messsignal einer mit ihnen nicht identischen Sendeeinheit empfangen. Zudem weist diese Ausgestaltung den Vorteil auf, dass jede Sendeeinheit auf der vollen Messbandbreite betrieben werden kann, wodurch ein besonders hohes Auflösungsvermögen bereitgestellt wird.

Zur Realisierung des intermittierenden Betriebs der Sendeeinheiten ist eine übergeordnete Steuerung realisiert. Die Steuerung ist über eine Kommunikationsverbindung mit jeder Sendeeinheit verbunden.

In einer Ausgestaltung der erfindungsgemäßen Vorrichtung ist die übergeordnete Steuerung in einer Sendeeinheit realisiert, so dass es ausreichend ist, wenn die anderen Sendeeinheiten mit der Sendeeinheit in Kommunikationsverbindung stehen, in der die übergeordnete Steuerung realisiert ist. Die Kommunikationsverbindung zu der Sendeeinheit, die die übergeordnete Steuerung aufweist, ist in einer Ausgestaltung sternförmig realisiert, in einer alternativen Ausgestaltung ist sie als Ring realisiert. Gemeinsam ist den Varianten, dass durch die übertragenen Daten jeder Sendeeinheit signalisiert wird, ob sie aktiv ist oder nicht.

Gemäß einer bevorzugten Ausgestaltung ist ein Kommunikationskabel vorhanden, das die Sendeeinheiten miteinander verbindet, wobei die Sendeeinheiten über das Kommunikationskabel Daten, insbesondere ein Synchronisationssignal, austauschen können. Eine Abstimmung des Betriebs der Sendeeinheiten kann folglich über das Kommunikationskabel erfolgen. Gemäß dieser Ausgestaltung wird eine besonders einfache und sichere Kommunikation der Sendeeinheiten gewährleistet. Das Kommunikationskabel kann Teil eines Busverkabelungssystem sein oder die Sendeeinheiten unmittelbar miteinander verbinden.

Alternativ kann eine drahtlose Schnittstelle zwischen den Sendeeinheiten vorhanden sein, wobei die Sendeeinheiten über die drahtlose Schnittstelle Daten , insbesondere eine Synchronisationssignal, austauschen können. Vorzugsweise kann die Abstimmung des Betriebs der Sendeeinheiten über die drahtlose Schnittstelle erfolgen. Eine derart ausgestaltete Vorrichtung weist den Vorteil auf, dass sie besonders einfach ausgestaltet ist. Besonders bevorzugt ist eine drahtlose Kommunikationsschnittstelle vorhanden. Die Verwendung einer drahtlosen Schnittstelle ist insbesondere vorteilhaft, wenn die Vorrichtung wenigstens drei oder mehr Sendeeinheiten aufweist.

Sind die Sendeeinheiten gleichzeitig als Empfangseinheiten ausgestaltet und ist der Betrieb der Sendeeinheiten derart abgestimmt, dass zu einem Zeitpunkt jeweils nur eine einzige Sende- und Empfangseinheit aktiv ist, ist es weiterhin besonders bevorzugt, wenn in regelmäßigen oder unregelmäßigen Zeitabständen nur eine Empfangseinheit ohne die zugehörige Sendeeinheit aktiv ist. Misst die aktive Empfangseinheit ein Reflexionssignal, wenn die zugehörige Sendeeinheit nicht aktiv ist, so ist dies ein Hinweise auf eine Fehlfunktion der weiteren Sende- und Empfangseinheit. Gemäß dieser Ausgestaltung kann daher ein besonders zuverlässiger Betrieb gewährleistet werden.

Eine solche Fehlfunktion kann beispielsweise daraus resultierten, dass in den Sende- und Empfangseinheiten angeordnete Mittel zur Zeitmessung, beispielsweise Schwingquartze, unterschiedliche Genauigkeit aufweisen können oder im Laufe der Zeit driften.

Ebenfalls bevorzugt ist es, wenn der Messfrequenzbereich, auf dem die Sendeeinheiten betrieben werden, wenigstens zwei Messsubbänder aufweist, und wenn der Betrieb der Sendeeinheiten derart abgestimmt ist, dass die Sendeeinheiten mit Frequenzen betrieben werden, die in unterschiedlichen Messsubbändern angeordnet sind. Ist lediglich eine Empfangseinheit vorhanden, so ist diese Empfangseinheit gemäß der zuvor beschriebenen Ausgestaltung derart ausgestaltet, dass sie Signale in den Frequenzen der wenigstens zwei Messsubbänder empfängt und diese Signale bzw. davon abgeleitete Größen an die Auswerteeinheit weiterleitet. Anhand der jeweiligen Frequenz kann ein Messsignal eindeutig einer Sendeeinheit zugeordnet werden. Sind die Sendeeinheiten gleichzeitig als Empfangseinheiten ausgestaltet, ist es bevorzugt, wenn die Empfangseinheiten nur die Frequenzen empfangen und weiterleiten, die in dem ihrer identischen Sendeeinheit zugeordneten Messsubband liegen.

Die zuvor beschriebene Ausgestaltung weist den Vorteil auf, dass die Sendeeinheiten gleichzeitig betrieben werden können, wodurch eine besonders hohe Messrate bereitgestellt werden kann. Dies gilt insbesondere, wenn die wenigstens zwei Messsubbänder keine gemeinsamen Frequenzen aufweisen.

Gemäß einer weiteren bevorzugten Ausgestaltung weist die Vorrichtung für jedes Messsubband einen eigenen Kalibriersatz auf.

Es ist ebenfalls vorteilhaft, wenn die Mess- bzw. Reflexionssignale dadurch unterscheidbar sind, dass sie sowohl zeitlich versetzt ausgesendet werden, als auch Frequenzen aufweisen, die unterschiedlichen Messsubbändern zuzuordnen sind. Gemäß dieser Ausgestaltung kann eine besonders zuverlässige Zuordnung der Mess- bzw. Reflexionssignale zu einer Sendeeinheit getroffen werden.

Weiterhin ist es bevorzugt, wenn jede Sendeeinheit gleichzeitig eine Empfangseinheit ist und wenn der Messfrequenzbereich wenigstens ein Kommunikationssubband aufweist, wobei jede Sendeeinheit und jede Empfangseinheit zumindest in dem wenigstens einen Kommunikationssubband betrieben werden. Durch die Aussendung und den Empfang eines Messsignals mit einer Frequenz, die innerhalb des Kommunikationssubbandes liegt, können die Sendeeinheiten die übrigen Empfangseinheiten über ihren Betrieb informieren, wobei auf eine weitere Verbindung zwischen den Sendeeinheiten, beispielsweise in Form einer Kabelverbindung oder einer drahtlosen Verbindung verzichtet werden kann. Diese Ausgestaltung ist insbesondere vorteilhaft, wenn die Unterscheidung der Mess- bzw. Reflexionssignale durch den zeitlichen Versatz der Aussendung der Messsignale erfolgt.

Alternativ können die verschiedenen Arten der Kommunikation der Sendeeinheiten untereinander auch miteinander kombiniert werden. Weist das Frequenzband, in dem die Sendeeinheiten betrieben werden, gleichzeitig wenigstens zwei Messsubbänder auf, ist es vorteilhaft, wenn das Kommunikationssubband und die Messsubbänder keine gemeinsame Frequenzen aufweisen.

Im Einzelnen gibt es nun eine Vielzahl von Möglichkeiten, die erfindungsgemäße Vorrichtung zur Messung der Entfernung zu einem Objekt auszugestalten. Dazu wird verwiesen sowohl auf die dem unabhängigen Patentanspruch nachgeordneten Patentansprüche als auch auf die nachfolgende Beschreibung von bevorzugten Ausführungsbeispielen in Verbindung mit der Zeichnung. In der Zeichnung zeigt
- Fig.1: ein erstes Ausführungsbeispiel einer erfindungsgemäßen Vorrichtung,
- Fig. 2: ein zweites Ausführungsbeispiel einer erfindungsgemäßen Vorrichtung und
- Fig. 3: eine beispielhafte Darstellung der Unterteilung des Frequenzbandes in Messsubbänder und ein Kommunikationssubband.

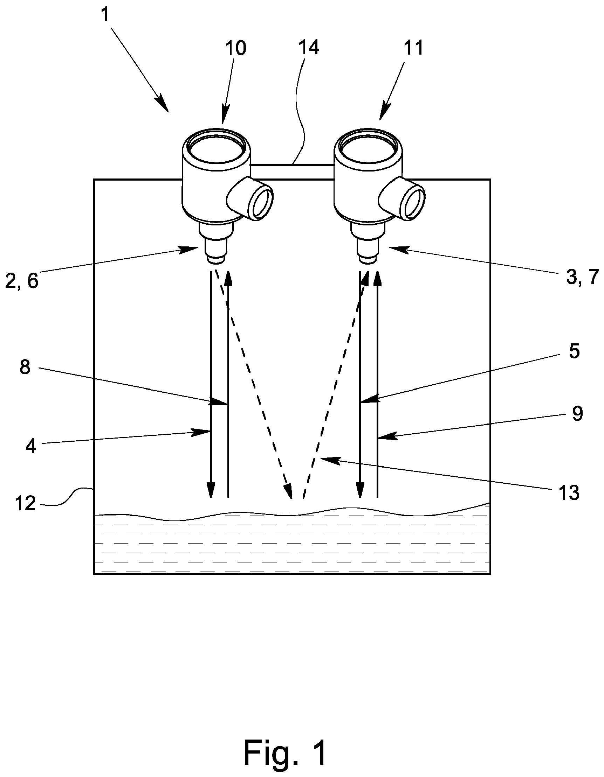

In Fig. 1 ist dargestellt ein erstes Ausführungsbeispiel einer erfindungsgemäßen Vorrichtung 1 zur Messung der Entfernung zu einer Füllgutoberfläche in einem Behälter 12. Die Vorrichtung 1 umfasst zwei freistrahlende Sendeeinheiten 2, 3 zur Aussendung eines elektromagnetischen Messsignals 4, 5, in Form eines frequenzmodulierten Radarsignals, zwei Empfangseinheiten 6, 7 für den Empfang eines an der Füllgutoberfläche reflektierten Reflexionssignals 8, 9, wobei jede Sendeeinheit 2, 3 als Empfangseinheit 6, 7 ausgestaltet ist und wobei jede Empfangseinheit 6, 7 zumindest teilweise auch Reflexionen der mit ihr nicht identischen Sendeeinheit 2, 3 empfängt, was vorliegend beispielhaft durch den Empfang des Reflexionssignals 13 dargestellt ist. Darüber hinaus umfasst die Vorrichtung 1 zwei Auswerteeinheiten 10, 11, die aus der Laufzeit der empfangenen Reflexionssignale 10, 11 und der Differenzfrequenz zwischen dem empfangenen Reflexionssignal 8, 9 und dem ausgesendeten Messsignal 4, 5 die Entfernung zur Füllgutoberfläche bestimmen.

Zudem sind die Sendeeinheiten 2, 3 und damit auch die Empfangseinheiten 10, 11 innerhalb einer Messumgebung angeordnet. In dem dargestellten Ausführungsbeispiel sind die Sendeeinheiten 2, 3 und die Empfangseinheiten 10, 11 innerhalb desselben Behälters 12 angeordnet und vermessen den Abstand zu derselben Füllgutoberfläche. Darüber hinaus weisen die Sendeeinheiten 2, 3 und die Empfangseinheiten 6, 7 einen identischen Messfrequenzbereich auf. Um eine gegenseitige Beeinflussung der Sendeeinheiten 2, 3 und der Empfangseinheiten 10, 11, die dadurch verursacht wird, dass eine Empfangseinheit 10, 11 ein Reflexionssignal 13 von einer mit ihr nicht identischen Sendeeinheit 2,3 empfängt, zu vermeiden, ist der Betrieb der Sendeeinheiten 2,3 aufeinander abgestimmt. Die Messsignale 4, 5 sind voneinander unterscheidbar und eine eindeutige Zuordnung jedes Messsignals zur einer Sendeeinheit 2, 3 ist unabhängig von der Anordnung der Sendeeinheiten möglich.

Die Kommunikation der Sendeeinheiten 2, 3 untereinander und insofern die-Abstimmung des Betriebs der Sendeeinheiten 2, 3 erfolgt über ein Kommunikationskabel 14, das die Sendeeinheiten 2, 3 miteinander verbindet. Im dargestellten Ausführungsbeispiel ist der Betrieb der Sendeeinheiten 2, 3 derart aufeinander abgestimmt, dass die Sendeeinheiten 2, 3 auf Frequenzen verschiedener Messsubbänder des Messfrequenzbereichs betrieben werden. Insofern unterscheiden sich die Messsignale 4, 5 in deren Frequenz. Die Empfangseinheiten 6, 7 sind derart ausgestaltet, dass sie nur die Frequenzen, die von der mit der jeweiligen Empfangseinheit identischen Sendeeinheit 2, 3 ausgesendet werden, empfangen und an die Auswerteeinheit 10, 11 weiterleiten. Eine gegenseitige Beeinflussung der Sende- und der Empfangseinheiten 6,7 wird dadurch ausgeschlossen.

Gemäß einem anderen Ausführungsbeispiel wird in der zuvor beschriebenen Anordnung auf das Kommunikationskabel 14 verzichtet.

Insofern stellt das in Fig. 1 dargestellte Ausführungsbeispiel eine Vorrichtung 1 bereit, die zum einen durch den Einsatz von mehreren Sende- und Empfangseinheiten 6, 7 eine besonders hohe Messgenauigkeit und eine besonders hohe Betriebssicherheit aufweist, wobei gewährleistet werden kann, dass die Sendeeinheiten 6, 7 störungsfrei arbeiten.

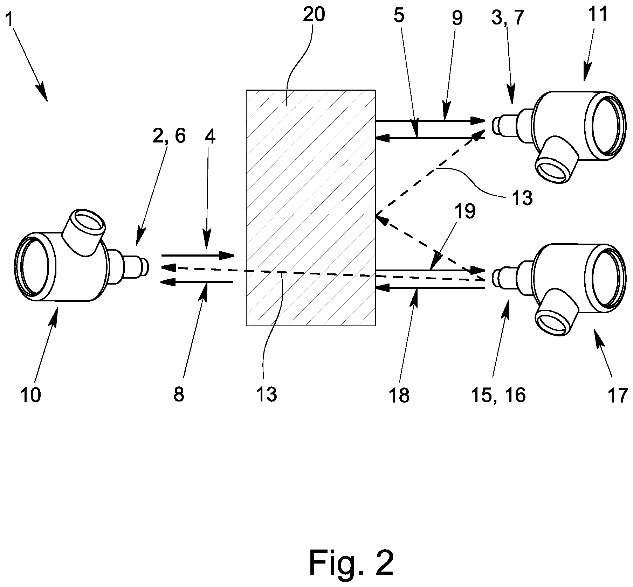

Fig. 2 zeigt ein zweites Ausführungsbeispiel einer erfindungsgemäßen Vorrichtung 1. Die dargestellte Vorrichtung 1 weist drei freistrahlende Sendeeinheiten 2, 3, 15 auf, die gleichzeitig als Empfangseinheiten 6, 7, 16 ausgestaltet sind, sowie drei Auswerteeinheiten 10, 11, 17 auf. Die Sendeeinheiten 2, 3, 15 sind derart ausgestaltet und angeordnet, dass sie jeweils ein elektromagnetisches Messsignal 4, 5, 18 in Form eines pulsförmigen Radarsignals in Richtung des Objektes 20, dessen Abstand zu den Sendeeinheiten 2, 3, 15 bestimmt wird, senden, welches nach der Reflexion an dem Objekt 20 von der jeweiligen Empfangseinheit 6, 7, 16 empfangen und an die Auswerteeinheit 10, 11, 17 weitergeleitet wird. Die Empfangseinheiten 6, 7 sind derart ausgestaltet und angeordnet, dass sie zumindest teilweise die Mess- bzw. Reflexionssignale aller Sendeeinheiten 2, 3 15 empfangen. Dies ist beispielhaft dargestellt durch den Verlauf des Messsignals 13 dargestellt. Zudem weisen die Sende- und Empfangseinheiten 6, 7 identische Messfrequenzbereiche auf. Um eine gegenseitige Beeinflussung der Sende- und Empfangseinheiten 6, 7, 16 zu vermeiden, ist der Betrieb der Sendeeinheiten 2, 3, 15 vorliegend aufeinander abgestimmt, so dass eine eindeutige Zuordnung jedes Mess- bzw. Reflexionssignals 8, 9, 19 zu einer der Sendeeinheiten 2, 3, 15 möglich ist. Vorliegend kommunizieren die Sendeeinheiten 2, 3 15 untereinander über eine drahtlose Schnittstelle, über die in der Folge auch die Abstimmung des Betriebs der Sendeeinheiten 2, 3, 15 erfolgt.

In dem dargestellten Ausführungsbeispiel erfolgt die Abstimmung des Betriebs der einzelnen Sendeeinheiten 2, 3, 15 derart, dass zu einem Zeitpunkt jeweils nur eine einzige Sendeeinheit 2, 3, 15 aktiv ist. Gleichzeitig sind die jeweiligen Empfangseinheiten 6, 7 16 genau dann aktiv, wenn die mit ihnen identische Sendeeinheit 2, 3 15 aktiv ist. In der Folge ist sichergestellt, dass eine Empfangseinheit 6, 7, 16 von anderen, nicht mit dieser Empfangseinheit identischen Sendeeinheiten 2, 3 15 ausgesendete Messsignale 13 nicht registriert.

Im Ergebnis stellt auch das in Fig. 2 dargestellte Ausführungsbeispiel eine Vorrichtung 1 zur Messung der Entfernung zu einem Objekt 20 bereit, die durch den Einsatz von drei Sendeeinheiten 2, 3 15 und drei Empfangseinheiten 6, 7, 16 eine besonders hohe Messgenauigkeit und Betriebssicherheit aufweist, wobei ein störungsfreier Betrieb der Sende- und Empfangseinheiten gewährleistet werden kann.

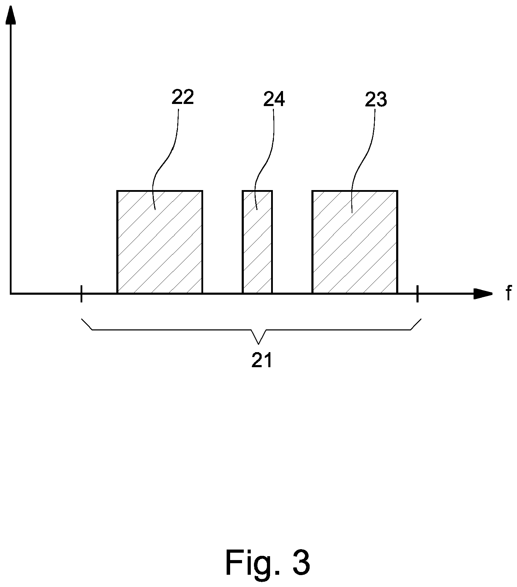

In Fig. 3 ist beispielhaft in einem Diagramm die Unterteilung eines Messfrequenzbereichs dargestellt, auf dessen Frequenzen die Sende- und Empfangseinheiten betrieben werden. Auf der X-Achse des Diagramms ist die Frequenz f aufgetragen. Der Bereich 21 entspricht dem Messfrequenzbereich. Dieser Bereich ist unterteilt in zwei Messsubbänder 22, 23 die jeweils einer Sendeeinheit 2, 3, 15 zugeordnet sind. Darüber hinaus weist der dargestellte Messfrequenzbereich ein Kommunikationssubband 24 auf, dessen Frequenzen von allen Sende- und Empfangseinheiten 6, 7, 16 ausgesendet bzw. empfangen werden. Im Betrieb einer Vorrichtung 1 kann über die Aussendung und dem Empfang von Frequenzen innerhalb des Kommunikationssubbandes 24 ein Empfänger 6, 7, 16 allein auf Signalebene darüber informiert werden, dass Sendeeinheiten 2, 3, 15 aktiv sind.

### Bezugszeichenliste

- 1: Vorrichtung zur Messung der Entfernung zu einem Objekt
- 2: Sendeeinheit
- 3: Sendeeinheit
- 4: Messsignal
- 5: Messsignal
- 6: Empfangseinheit
- 7: Empfangseinheit
- 8: Reflexionssignal
- 9: Reflexionssignal
- 10: Auswerteeinheit
- 11: Auswerteeinheit
- 12: Behälter
- 13: Messsignal
- 14: Kommunikationskabel
- 15: Sendeeinheit
- 16: Empfangseinheit
- 17: Auswerteeinheit
- 18: Messsignal
- 19: Reflexionssignal
- 20: Objekt
- 21: Messfrequenzbereich
- 22: Messsubband
- 23: Messsubband
- 24: Kommunikationsband

## Patentansprüche

1. Vorrichtung (1) zur Messung der Entfernung zu einem Objekt (20), umfassend wenigstens zwei freistrahlende Sendeeinheiten (2, 3, 15) zur Aussendung eines elektromagnetischen Messsignals (4, 5, 18), wenigstens eine Empfangseinheit (6, 7, 16) für den Empfang eines an dem Objekt (20) reflektierten Reflexionssignals (8, 9, 19) und wenigstens eine Auswerteeinheit (10, 11, 17), wobei die wenigstens eine Empfangseinheit (6, 7, 16) das empfangene Reflexionssignal (8, 9, 19) an die wenigstens eine Auswerteeinheit (10, 11, 17) weiterleitet, die Sendeeinheiten (2, 3, 15) und die wenigstens eine Empfangseinheit (6, 7, 16) innerhalb einer Messumgebung angeordnet sind und dass die Sendeeinheiten (2, 3, 15) und die wenigstens eine Empfangseinheit (6, 7, 16) wenigstens einen gemeinsamen Messfrequenzbereich (21) aufweisen,
**dadurch gekennzeichnet,**
**dass** der Betrieb der Sendeeinheiten (2, 3, 15) aufeinander abgestimmt ist, so dass die von den Sendeeinheiten (2, 3, 15) ausgesendeten Messsignale (4, 5, 18) bzw. die aus den Messignalen resultierenden Reflexionssignale (8, 9, 19) voneinander unterscheidbar sind und eine eindeutige Zuordnung jedes Messsignals (4, 5, 18) bzw. Reflexionssignals (8, 9, 19) zu jeweils einer Sendeeinheit (2, 3, 15) unabhängig von der Anordnung der Sendeeinheiten (2, 3, 15) durch die Empfangseinheit (6, 7, 16) möglich ist.

2. Vorrichtung (1) nach Anspruch 1, **dadurch gekennzeichnet, dass** die Vorrichtung (1) ein Füllstandmessgerät zur Messung des Füllstandes in einem Behälter (12) umfasst.

3. Vorrichtung (1) nach einem der Ansprüche 1 oder 2, **dadurch gekennzeichnet, dass** jede Sendeeinheit (2, 3, 15) gleichzeitig eine Empfangseinheit (6, 7, 16) ist.

4. Vorrichtung (1) nach einem der Ansprüche 1 bis 3, **dadurch gekennzeichnet, dass** das von den Sendeeinheiten (2, 3, 15) ausgesendete Messsignal (4, 5, 18) ein pulsförmiges oder frequenzmoduliertes Radarsignal ist.

5. Vorrichtung (1) nach einem der Ansprüche 1 bis 4, **dadurch gekennzeichnet, dass** der Betrieb der Sendeeinheiten (2, 3, 15) derart aufeinander abgestimmt ist, dass zu einem Zeitpunkt jeweils nur eine einzige Sendeeinheit (2, 3, 15) aktiv ist.

6. Vorrichtung (1) nach Anspruch 5, **dadurch gekennzeichnet, dass** die Sendeeinheiten (2, 3, 15) abwechselnd ein Messsignal (4, 5, 18) aussenden.

7. Vorrichtung (1) nach Anspruch 5 oder 6, **dadurch gekennzeichnet, dass** die Sendeeinheiten (2, 3, 15) gleichzeitig als Empfangseinheiten (6, 7, 16) ausgestaltet sind und dass der Betrieb der Sendeeinheiten (2, 3, 15) derart abgestimmt, dass zu einem Zeitpunkt jeweils nur eine einzige Sende- und Empfangseinheit aktiv ist,wobei in regelmäßigen oder unregelmäßigen Zeitabständen nur eine Empfangseinheit (6, 7, 16) ohne die zugehörige Sendeeinheit (2, 3, 15) aktiv ist.

8. Vorrichtung (1) nach einem der Ansprüche 1 bis 7, **dadurch gekennzeichnet, dass** ein Kommunikationskabel (14) vorhanden ist, das die Sendeeinheiten (2, 3, 15) miteinander verbindet, wobei die Sendeeinheiten (2, 3, 15) über das Kommunikationskabel (14) Daten austauschen können.

9. Vorrichtung (1) nach einem der Ansprüche 1 bis 7, **dadurch gekennzeichnet, dass** eine drahtlose Schnittstelle zwischen den Sendeeinheiten (2, 3, 15) vorhanden ist, wobei die Sendeeinheiten (2, 3, 15) über die drahtlose Schnittstelle Daten austauschen können.

10. Vorrichtung (1) nach einem der Ansprüche 1 bis 9, **dadurch gekennzeichnet, dass** der Messfrequenzbereich (21) wenigstens zwei Messsubbänder (22, 23) aufweist, und dass der Betrieb der Sendeeinheiten (2, 3, 15) derart aufeinander abgestimmt ist, dass die Sendeeinheiten (2, 3, 15) in unterschiedlichen Messsubbändern (22, 23) betrieben werden.

11. Vorrichtung (1) nach Anspruch 10, **dadurch gekennzeichnet, dass** für jedes Messsubband ein eigener Kalibriersatz vorhanden ist.

12. Vorrichtung (1) nach Anspruch 10 oder 11, **dadurch gekennzeichnet, dass** die wenigstens zwei Messsubbänder (22, 23) keine gemeinsamen Frequenzen aufweisen.

13. Vorrichtung (1) nach einem der Ansprüche 1 bis 12, **dadurch gekennzeichnet, dass** jede Sendeeinheit (2, 3, 15) gleichzeitig eine Empfangseinheit (6, 7, 16) ist und dass der Messfrequenzbereich (21) wenigstens ein Kommunikationssubband (24) aufweist, wobei jede Sendeeinheit (2, 3, 15) und jede Empfangseinheit (6, 7, 16) derart ausgestaltet sind, dass zumindest in dem wenigstens einen Kommunikationssubband (24) betrieben werden.
